# EUROPÄISCHE PATENTSCHRIFT

(11) **EP 2 576 003 B1**
(45) Veröffentlichungstag und Bekanntmachung des Hinweises auf die Patenterteilung: **09.01.2019**
(21) Anmeldenummer: 11752083.3
(22) Anmeldetag: 29.04.2011
(51) Int. Cl.: B01D 53/04, A62B 7/14

(54) **VERFAHREN UND VORRICHTUNG ZUR ENTFERNUNG VON FLÜCHTIGEN ORGANISCHEN SUBSTANZEN AUS DER RAUMLUFT VON GESCHLOSSENEN HABITATEN**
METHOD AND DEVICE FOR REMOVING VOLATILE ORGANIC SUBSTANCES FROM THE CONTAINED AIR OF CLOSED HABITATS
PROCÉDÉ ET DISPOSITIF POUR ENLEVER DES SUBSTANCES ORGANIQUES VOLATILES DE L'AIR AMBIANT D'HABITATS FERMÉS

(30) Priorität: 28.05.2010 DE 102010022805
(43) Veröffentlichungstag der Anmeldung: 10.04.2013
(73) Patentinhaber: Airbus Defence and Space GmbH, 82024 Taufkirchen (DE)
(72) Erfinder: RAATSCHEN, Willigert, 88090 Immenstaad (DE); MATTHIAS, Carsten, 8846 Friedrichshafen (DE); WESTERMANN, Helmut, 88677 Markdorf (DE)
(74) Vertreter: Daub, Thomas
(86) Internationale Anmeldenummer: PCT/DE2011/000461
(87) Internationale Veröffentlichungsnummer: WO 2011/147396

(56) Entgegenhaltungen:
- WO-A1-2011/146478
- DE-A1- 19 653 964
- DE-T2- 60 032 649
- FR-A1- 2 882 662
- GB-A- 2 275 997
- US-A- 3 242 651
- US-A1- 2010 005 958
- OTSUJI, K., HIRAO, M., SATOH, S.: "A Regenrable Carcbon Dioxide Removal and Oxygen Recovery System for the Japanese Experiment Module", ACTA ASTRONAUTICA, vol. 15, no. 1, 1987, pages 45-54, Great Britain

## Beschreibung

Die Erfindung betrifft ein Verfahren zur Entfernung von flüchtigen organischen Substanzen aus der Raumluft von geschlossenen Habitaten nach den Merkmalen des Patentanspruchs 1 sowie eine Vorrichtung dazu nach den Merkmalen des Patentanspruchs 6.

Um der Besatzung geschlossener Habitate, z.B. U-Booten oder Weltraumstationen, gesunde Umgebungsbedingung bieten zu können, müssen in der Raumluft die Konzentrationen von flüchtigen organischen Substanzen, auch als VOC bezeichnet, niedrig gehalten werden. VOC entstehen üblicherweise durch das Ausgasen von Materialien, Leckagen oder durch metabolische Prozesse der Besatzung.

Zur Klimatisierung der Raumluft in geschlossenen Habitaten wird üblicherweise Kältemittel (z.B. R134a) als Arbeitsmedium in den Kühlaggregaten, z.B. Klimaanlagen, verwendet. Durch Leckagen kann das Kältemittel in die Raumluft gelangen. Auch durch Instandsetzungs- und Wartungsarbeiten an den Kühlaggregaten kann Kältemittel in die Raumluft gelangen.

Üblicherweise wird in geschlossenen Habitaten Aktivkohle zur Bindung von Schadgasen, insbesondere von VOC benutzt. R134a allerdings ist ein besonders stabiles Molekül, was sich zudem nur in sehr geringen Mengen an Aktivkohle adsorbieren lässt. Die Beladung bei üblichen Raumluftzuständen um 25°C, 60% relative Feuchte und 1 bar beträgt ca. 0,1 Gewichts-%. Bei bekannten Techniken, R134a katalytisch bei hohen Temperaturen und Energieeinsatz zu zersetzen, werden toxische Gase, wie z.B. Flurwasserstoff freigesetzt, welche ihrerseits wieder sicher entfernt bzw. gebunden werden müssen.

Aus US 3,507,051 und EP 0 381 942 A1 sind Verfahren zur Regeneration von Adsorbern bekannt. Krik-Othmer: Encyclopedia of Chemical Technology, Fourth Edition, John Wiley Sons, New York 1991 , Vol. 1 , ISBN 0-471 -52669-X, S. 546-557 beschreibt die Prinzipien der Temperaturwechseltechnik sowie der Druckwechseltechnik.

Es sind durchaus Verfahren bekannt, um R134a aus Kälteanlagen abzusaugen, doch hier liegt R134a in fast reiner Konzentration vor. In der Raumluft in geschlossenen Habitaten muss die R134a-Konzentration allerdings unter den zulässigen Grenzwerten (100-200 ppm) gehalten werden. Hierzu sind keine Verfahren bekannt, welche R134a in technisch sinnvoller Weise ohne große Luftverluste binden.

Ferner sind aus der WO 2011/146478 A1 und dem Dokument OTSUJI K., HIRAO, M., SATOH, S.: "A Regenerable Carbon Dioxide Removal and Oxygen Recovery Sytem for the Japanese Experiment Module", ACTA ASTRONAUTICA, Bd. 15, Nr. 1, - 1987, Great Britain, auf den Seiten 45-54 eine Vorrichtung zur Entfernung von flüchtigen organischen Substanzen aus der Raumluft von geschlossenen Habitaten bekannt.

Aufgabe der Erfindung ist es, ein regeneratives Verfahren anzugeben, mit welchem flüchtige organische Substanzen aus der Raumluft geschlossener Habitate gebunden und abgeführt werden können. Eine weitere Aufgabe besteht in der Angabe einer entsprechenden Vorrichtung.

Diese Aufgaben werden mit einem Verfahren gemäß den Merkmalen des geltenden Patentanspruchs 1 sowie mit einer Vorrichtung des geltenden Patentanspruchs 6 gelöst.

Erfindungsgemäß wird Raumluft aus dem geschlossenen Habitat durch ein geeignetes Adsorberbett, ein hydrophobes Zeolithbett, geleitet, wobei sich Kältemittel (Freone, wie R134a), VOCs und Luft in die Porenstruktur des Adsorbers einlagern. Die Beladung des Adsorbers mit den Bestandteilen der Raumluft erfolgt in einem vorgegebenen Zeitintervall, z.B. zwischen 2 und 15 Stunden. Anschließend wird das Adsorberbett verschlossen und es erfolgt eine Absaugung der in den Poren und Hohlräumen befindlichen Luft aus dem Adsorber. Diese Luft wird dem geschlossenen Habitat wieder zugeführt. Findet dieser Prozess der Absaugung bei Raumtemperatur statt, werden nur geringe Mengen an R134a und VOC bei der Druckabsenkung desorbiert. Um eine Desorption der flüchtigen organischen Substanzen aus dem Adsorberbett zu erreichen, wird das Adsorberbett aufgeheizt. Das sich durch die Aufheizung gebildete Desorbat wird einer Umgebung außerhalb des geschlossenen Habitats zugeführt.

In einer Variante der Erfindung erfolgt die Aufheizung des Adsorberbetts mittels elektrischer Heizung oder durch mit dem Adsorberbett verbundenen Wärmetauschern. In dieser Variante erfolgt die Abführung des Desorbats mittels Spülung des Adsorbers mit Wasserdampf, Wasser, CO₂ oder anderen adäquaten Spülgasen.

In einer zweiten Variante der Erfindung erfolgt die Aufheizung des Adsorberbetts mittels Spülung mit Wasserdampf bei einer Temperatur in einem Temperaturintervall von z.B. 100°C und 120°C.

Zweckmäßig wird das Desorbat einem Kompressor zugeführt, welcher das Desorbat in die Umgebung außerhalb des geschlossenen Habitats leitet. So ist z.B. bei einem U-Boot ohnehin ein Kompressor vorhanden, um das aus der Raumluft gefilterte CO₂ an das Meerwasser abzugeben. Für die vorliegende Erfindung kann so der Kompressor ebenso zur Entsorgung des R134a und der sonstigen VOCs genutzt werden.

An Bord einer Raumstation ist ein CO₂-Kompressor nicht unbedingt notwenig. Hier können R134a und die sonstigen VOCs direkt durch das Raumvakuum aus dem Adsorberbett entsorgt werden.

Beladungstests haben ergeben, dass es Adsorber, wie Zeolithe, gibt, die eine höhere Bindung für Freone aufweisen, als herkömmliche Aktivkohlen. Zudem ist die Bindung nur in geringem Umfang von der Raumluftfeuchte abhängig. Wegen der Hydrophobizität ist es zweckmäßig, solche Adsorber mit Wasserdampf oder Wärme zu desorbieren, um somit einen quasi-kontinuierlichen Bindeprozess zu realisieren.
Die erfindungsgemäße Vorrichtung zur Entfernung von flüchtigen organischen Substanzen umfasst im Wesentlichen ein Gehäuse zur Aufnahme eines Adsorbers sowie mit dem Gehäuse verbundene Raumluftzu- und rückführungsleitungen sowie weitere mit dem Gehäuse verbundene Leitungen, wie z.B. eine Zuleitung für ein Spülgas und eine Ableitung für das Desorbat während der Regeneration.
Die Erfindung sowie vorteilhafte Ausgestaltungen der Erfindung werden im Weiteren anhand von Zeichnungen näher erläutert. Es zeigen:
- Fig. 1: eine beispielhafte schematische Darstellung einer ersten Ausführungsform, gemäss der das erfindungsgemässe Verfahren durchgeführt werden kann,
- Fig. 2: eine beispielhafte schematische Darstellung einer zweiten Ausführungsform der Erfindung,
- Fig. 3: ein Ablaufschema des erfindungsgemäßen rekursiven Verfahrens nach der ersten Ausführungsform,
- Fig. 4: ein Ablaufschema des erfindungsgemäßen rekursiven Verfahrens nach der zweiten Ausführungsform,

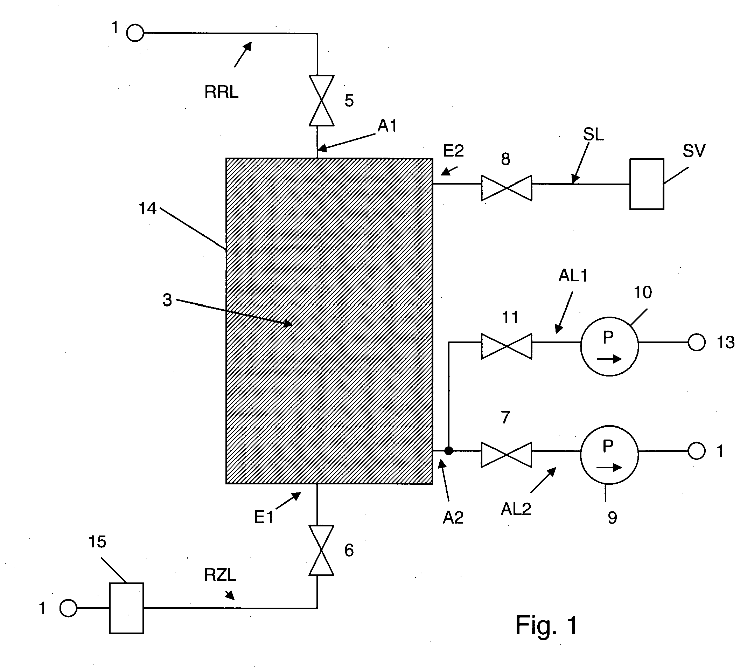

Fig. 1 zeigt eine schematische Darstellung einer ersten Ausführungsform des Verfahrens der Erfindung. Der Adsorber 3 befindet sich innerhalb eines Gehäuses 14. Das Gehäuse 14 weist einen ersten Eingang E1 auf, an welchen die Raumluftzuführungsleitung RZL angeschlossen ist. Die Raumluftzuführungsleitung RZL verbindet den Innenraum des geschlossenen Habitats 1 mit dem Adsorber 3. In der Raumluftzuführungsleitung RZL ist habitatseitig ein Gebläse 15 und gehäuseseitig ein erstes Ventil 6 vorgesehen.

Das Gehäuse 14 weist einen ersten Ausgang A1 auf, an welchen eine Raumluftrückführungsleitung RRL angeschlossen ist. Die Raumluftrückführungsleitung RRL verbindet den Innenraum des geschlossenen Habitats 1 mit dem Adsorber 3. In der Raumluftrückführungsleitung RRL ist ein zweites Ventil 5 angeordnet.

Während der Adsorption bläst der Ventilator 15 Raumluft aus dem Habitat 1 durch das geöffnete Ventil 6 durch den Adsorber 3. Im Adsorber 3 werden z.B. R134a sowie VOCs adsorbiert. Die gereinigte Luft gelangt dann durch das geöffnete Ventil 5 zurück in das Habitat 1.

Das Gehäuse 14 weist einen zweiten Ausgang A2 auf, welcher mit einer ersten Abluftleitung AL1 verbunden ist. Diese Abluftleitung AL1 verbindet den Adsorber 3 über ein viertes Ventil 11 und einen Kompressor 10 mit einer Umgebung 13 außerhalb des Habitats 1. Hierbei ist das vierte Ventil 11 in der Abluftleitung gehäuseseitig angeordnet und der Kompressor 10 umgebungsseitig. Somit ist gewährleistet, dass bei geöffnetem Ventil 11 Desorbat aus dem Adsorber 3 durch das Ventil 11 und durch den Kompressor 10 an die Umgebung 13 gepumpt werden kann.
Hierbei ist der Kompressor 10, z.B. ein CO₂-Kompressor, nur optional im Falle des Einsatzes der Vorrichtung in einem U-Boot. Beim Einsatz der Vorrichtung in einer Weltraumstation kann auf einen Kompressor verzichtet werden. Das Desorbat kann bei geöffnetem Ventil 11 durch das Raumvakuum aus dem Adsorber 3 entfernet werden.

An den zweiten Ausgang A2 ist ebenfalls eine zweite Abluftleitung AL2 angeschlossen. Diese Abluftleitung AL2 verbindet den Adsorber 3 mit dem Innenraum des geschlossenen Habitats. In der Abluftleitung ist gehäuseseitig ein fünftes Ventil 7 und habitatseitig eine Vakuumpumpe 9 angeschlossen. Bei geöffnetem Ventil 7 und gleichzeitig geschlossenen Ventil 11 kann die sich in den Löchern und Hohlräumen im Adsorberbett 3 befindliche Luft abgesaugt und dem Innenraum des Habitats 1 zugeführt werden. Dadurch wird erreicht, dass bei dem rekursiven Prozess der Entfernung von z.B. R134a bzw. VOCs möglichst wenig Luft aus dem Innenraum des Habitats 1 einer Umgebung 13 außerhalb des Habitats 1 zugeführt wird.

Das Gehäuse 14 weist einen zweiten Eingang E2 auf, welcher mit einer Spülleitung SL verbunden ist. Diese Spülleitung SL verbindet den Adsorber 3 mit einem Spülmittelvorratsbehälter SV über ein drittes Ventil 8. Durch die Spülleitung SL wird bei geöffnetem Ventil 8 und geschlossenen Ventilen 11 und 7 z.B. Wasserdampf mit einer Temperatur von 100°C-120°C in das Adsorberbett 3 geleitet. Dadurch wird erreicht, dass das im Adsorber 3 adsorbierte R134a bzw. VOCs desorbiert werden. Nach einer vorgegebenen Zeit wird Ventil 11 geöffnet und das Desorbat wird an die Umgebung 13 abgegeben.

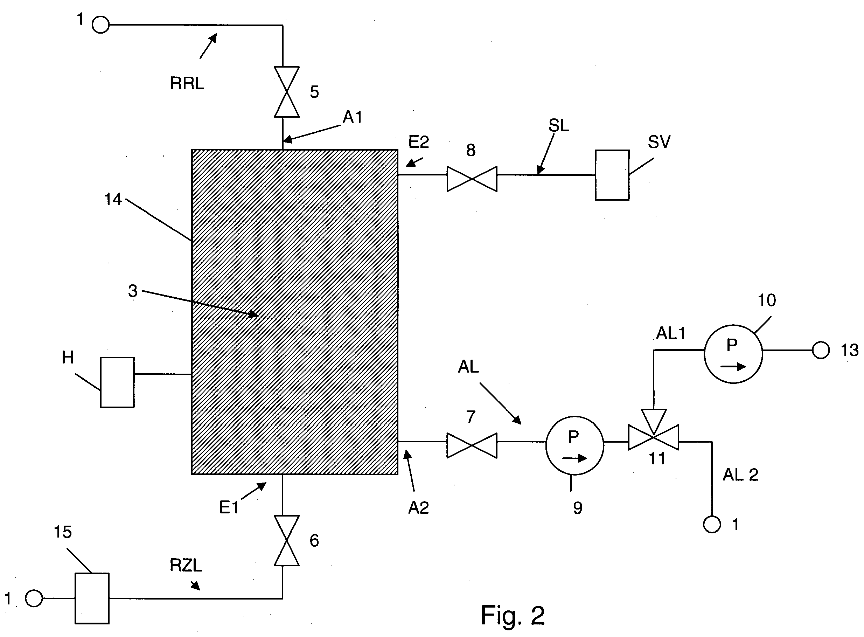

Fig. 2 zeigt eine schematische Darstellung einer zweiten Ausführungsform der Erfindung. Die Beschreibung bezüglich des ersten Eingangs E1, des zweiten Eingangs E2 und des ersten Ausgangs A1 entsprechen denen der ersten Ausführungsform.

Die zweite Ausführungsform weist eine Heizeinheit H auf, welche mit dem Gehäuse 14 verbunden ist. Diese Heizeinheit H kann z.B. eine elektrische Heizung oder ein Wärmetauscher sein.
Am zweiten Ausgang A2 des Gehäuses 14 ist eine Abluftleitung AL angeschlossen. Diese Abluftleitung verbindet den Adsorber 3 über ein Dreiwegeventil 11 einerseits mit dem Innenraum des Habitats 1 und andererseits mit der Umgebung 13 des Habitats 1. In der Abluftleitung AL ist gehäuseseitig ein viertes Ventil 7 und dreiwegeventilseitig 11 eine Vakuumpumpe 9 angeordnet.
Der eine Ausgang des Dreiwegeventils 11 ist über einen Kompressor 10 mit der Umgebung 13 außerhalb des Habitats 1 verbunden. Der andere Ausgang des Dreiwegeventils 11 ist mit dem Innenraum des Habitats 1 verbunden.

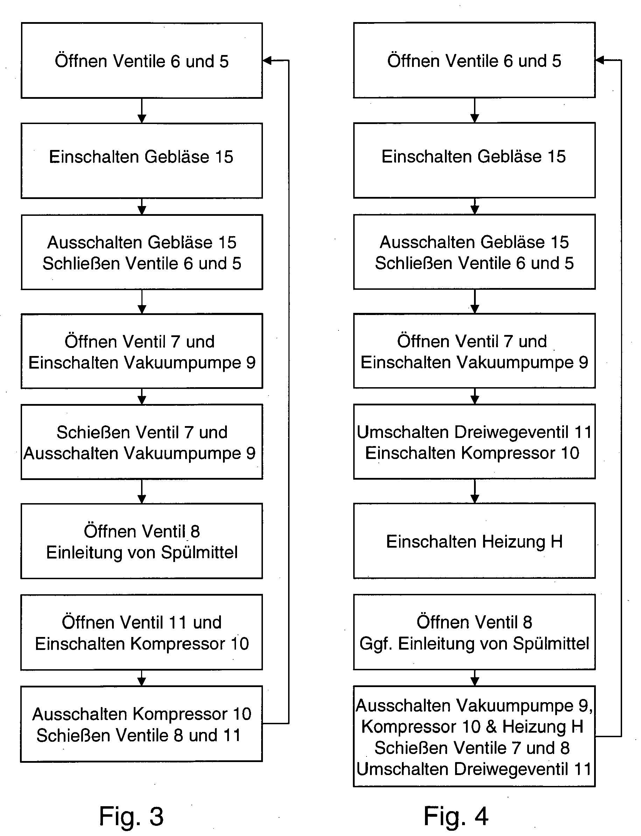

Fig. 3 zeigt ein Ablaufschema des erfindungsgemäßen rekursiven Verfahrens nach der ersten Ausführungsform. In der Ausgangsstellung sind sämtliche Ventile geschlossen.
Zunächst werden im Schritt 1 die Ventile 6 und 5 in den Raumluftzuführungsleitungen RZL bzw. Raumluftrückführungsleitung RRL geöffnet. Anschließend wird im Schritt 2 ein Gebläse 15 eingeschaltet, mittels welchem Raumluft aus dem Habitat 1 durch das Adsorberbett 3 geleitet wird. Durch die Raumluftrückführungsleitung RRL wird die gereinigte Luft wieder dem Innenraum des Habitats 1 zugeführt. Das Gebläse 15 bleibt eine vorgegebene Zeit eingeschaltet, z.B. 2-15 Stunden. Nach dieser Zeit werden in Schritt 3 die Ventile 6 und 5 geschlossen.
Im Schritt 4 wird das Ventil 7 in der Abluftleitung 2 AL2 geöffnet und eine Vakuumpumpe 9 eingeschaltet. Mittels der Vakuumpumpe 9 wird Luft aus den Hohlräumen im Adsorber 3 zurück in den Innenraum des Habitats 1 gepumpt. Anschließend wird in Schritt 5 das Ventil 7 geschlossen und die Vakuumpumpe 9 ausgeschaltet.
Im Schritt 6 wird Ventil 8 in der Spülleitung SL geöffnet und aus einem Spülmittelvorratsbehälter SV Wasserdampf mit einer Temperatur von mehr als 100°C in das Adsorberbett 3 geleitet. Der heiße Wasserdampf kondensiert zu Beginn an der vergleichsweise kalten Oberfläche des Adsorbers 3. Durch die Aufheizung des Adsorbers 3 werden R134a sowie VOCs desorbiert. Nach einer vorgegebenen Zeit wird in Schritt 7 das Ventil 11 in der Abluftleitung AL1 geöffnet und gegebenenfalls der Kompressor 10 eingeschaltet. Dadurch wird das Desorbat aus dem Adsorberbett an die Umgebung 13 außerhalb des Habitats 1 geleitet.
Im Schritt 8 wird der Kompressor 10 ausgeschaltet und die Ventile 8 und 11 werden geschlossen, und das rekursive Verfahren kann bei Schritt 1 erneut beginnen.

Fig. 4 zeigt ein Ablaufschema des erfindungsgemäßen rekursiven Verfahrens nach der zweiten Ausführungsform. In der Ausgangsstellung sind sämtliche Ventile geschlossen. Das Dreiwegeventil 11 ist dabei in die Position gebracht, dass der Innenraum des Habitats 1 mit der Vakuumpumpe 9 verbunden ist.

Die Schritte 1 bis 4 entsprechen den Schritten 1 bis 4 aus Fig. 3. Nach einer vorgegebenen Zeit wird in Schritt 5 das Dreiwegeventil 11 umgeschaltet und gegebenenfalls der Kompressor 10 eingeschaltet, so dass das Desorbatgas über die Abluftleitung AL1 des Adsorberbetts 3 über den Kompressor 10 der Umgebung 13 außerhalb des Habitats 1 zugeführt wird. In Schritt 6 wird die Heizung H eingeschaltet. Durch die steigende Temperatur im Adsorberbett 3 bei niedrigem Druck im Gehäuse 14 werden R134a und VOCs desorbiert. Das Desorbat wird durch die Abluftleitung AL1 der Umgebung 13 außerhalb des Habitats 1 zugeführt.
In Schritt 7 wird gegebenenfalls Ventil 8 geöffnet und zusätzlich Spülmittel, z.B. heißer Wasserdampf, CO₂ oder Wasser wird über die Spülleitung SL durch das Adsorberbett geleitet. Dadurch wird die Desorption verstärkt und die Schadgase abtransportiert.
Im Schritt 8 werden Vakuumpumpe 9, Kompressor 10 und die Heizung H ausgeschaltet, Ventil 7 und 8 geschlossen, und das Dreiwegeventil 11 umgeschaltet. Das rekursive Verfahren kann bei Schritt 1 erneut beginnen.

## Patentansprüche

1. Verfahren zur Entfernung von flüchtigen organischen Substanzen aus der Raumluft von geschlossenen Habitaten,
umfassend folgende Verfahrensschritte
a) Durchleiten von Raumluft durch ein Adsorberbett (3) bestehend aus einem hydrophoben Zeolithbett,
b) Verschließen des Adsorberbetts,
c) Absaugen der Luft aus dem Adsorberbett und Zuführung der Luft in das geschlossene Habitat (1),
d) Desorption der flüchtigen organischen Substanzen, insbesondere Freone, wie R134a und VOCs aus dem Adsorberbett (3) durch Aufheizen des Adsobers (3) und
e) Zuführung des Desorbats einer Umgebung (13) außerhalb des geschlossenen Habitats, wobei dem Adsorberbett (3) Wasserdampf, Wasser oder CO₂ aus einem Spülmittelvorratsbehälter (SV) über eine Spülleitung (SL) zugeführt wird.

2. Verfahren nach Anspruch 1,
**dadurch gekennzeichnet, dass**
im Schritt d) die Aufheizung des Adsorbers (3) mittels elektrischer Aufheizung oder mit dem Adsorberbett (3) verbundenen Wärmetauschern oder mittels Spülung mit heißem Wasserdampf, Wasser oder CO₂ erfolgt.

3. Verfahren nach Anspruch 1,
**dadurch gekennzeichnet, dass**
im Schritt d) die Desorption zusätzlich durch Druckabsenkung im Gehäuse (14) unterstützt wird.

4. Verfahren nach einem der vorangehenden Ansprüche,
**dadurch gekennzeichnet, dass**
im Schritt e) das Desorbat einem Kompressor (10) zugeführt wird, welcher das Desorbat in die Umgebung (13) außerhalb des geschlossenen Habitats leitet.

5. Verfahren nach einem der vorangehenden Ansprüche,
**dadurch gekennzeichnet, dass**
das Adsorbermaterial eine Porengrösse aufweist, welche insbesondere günstig für die Bindung und Adsorption von R134a oder anderen Freonen ist.

6. Vorrichtung zur Entfernung von flüchtigen organischen Substanzen aus der Raumluft von geschlossenen Habitaten,
umfassend ein Gehäuse (14) mit einem ersten Eingang (E1), einem zweiten Eingang (E2), einem ersten Ausgang (A1) und einem zweiten Ausgang (A2) und zur Aufnahme eines Adsorbers (3) bestehend aus einem hydrophoben Zeolithbett,
einer Raumluftzuführungsleitung (RZL) mit einem ersten Ventil (6) zwischen dem ersten Eingang (E1) und dem geschlossenen Habitat (1),
einer Raumluftrückführungsleitung (RRL) mit einem zweiten Ventil (5) zwischen dem ersten Ausgang (A1) und dem geschlossenen Habitat (1), eine Spülleitung (SL) mit einem dritten Ventil (8) zwischen einem Spülmittelvorratsbehälter (SV) und dem zweiten Eingang (E2), mindestens eine Abluftleitung (AL, AL1, AL2) am zweiten Ausgang (A2) zur Rückführung von Luft aus dem Adsorberbett in das geschlossene Habitat (1) und zur Ableitung des Desorbats an eine Umgebung (13) außerhalb des geschlossenen Habitats (1),
**dadurch gekennzeichnet, dass**
in der Abluftleitung (AL) aus Richtung des zweiten Ausgangs (A2) gesehen ein viertes Ventil (7), eine Vakuumpumpe (9) und ein Dreiwegeventil (11) angeordnet ist und dass der eine Ausgang des Dreiwegeventils (11) mit dem geschlossenen Habitat (1) und der andere Ausgang des Dreiwegeventils (11) mit der Umgebung (13) außerhalb des geschlossenen Habitats (1) verbunden ist.

7. Vorrichtung nach Anspruch 6,
**dadurch gekennzeichnet, dass**
ein Gebläse (15) in der Raumluftzuführungsleitung (RZL) zwischen dem geschlossenen Habitat (1) und dem ersten Ventil (6) angeordnet ist.

8. Vorrichtung nach Anspruch 6 oder 7,
**dadurch gekennzeichnet, dass**
das Gehäuse (14) eine Heizvorrichtung (H), z. B. einen Wärmetauscher oder eine elektrische Heizung aufweist.

9. Vorrichtung nach Anspruch 8, **dadurch g**ekennzeichnet, **dass**
zwischen dem Dreiwegeventil (11) und der Umgebung (13) ein Kompressor (10) vorhanden ist.

10. Vorrichtung zumindest nach Anspruch 6,
**dadurch gekennzeichnet, dass**
eine erste am zweiten Ausgang (A2) angeschlossene Abluftleitung (AL1) den zweiten Ausgang (A2) mit der Umgebung (13) außerhalb des geschlossenen Habitats (1) verbindet, wobei die Abluftleitung ein viertes Ventil (11) umfasst.

11. Vorrichtung nach Anspruch 10, **dadurch gekennzeichnet, dass**
in der ersten Abluftleitung (AL1) zwischen der Umgebung (13) außerhalb des geschlossenen Habitats (1) und dem vierten Ventil (11) ein Kompressor (10) vorhanden ist.

12. Vorrichtung nach Anspruch 10 oder 11,
**dadurch gekennzeichnet, dass**
die zweite am zweiten Ausgang (A2) angeschlossene zweite Abluftleitung (AL2) den zweiten Ausgang mit dem geschlossenen Habitat (1) verbindet, wobei die Abluftleitung (AL2) aus Richtung des zweiten Ausgangs gesehen, ein fünftes Ventil (7) und eine Vakuumpumpe (9) umfasst.

## Claims

1. Method for removing volatile organic substances from the contained air of closed habitats,
comprising the following method steps
a) Conveying contained air through an adsorber bed (3) implemented of a hydrophobic zeolite bed,
b) Closing off the adsorber bed,
c) Removing the air out of the adsorber bed by suction and feeding the air into the closed habitat (1),
d) Desorption of the volatile organic substances, in particular freons, like R134a and VOCs, from the adsorber bed (3) by heating the adsorber (3), and
e) Feeding of the desorbate to an environment (13) outside the closed habitat,
wherein water vapour, water or CO₂ is fed to the adsorber bed (3) from a purging medium storage container (SV) via a purging conduit (SL).

2. Method according to claim 1,
**characterised in that** in step d) the heating of the adsorber (3) is realized by electrical heating or by heat exchangers connected with the adsorber bed (3) or by purging with hot water vapour, water or CO₂.

3. Method according to claim 1,
**characterised in that** in step d) the desorption is additionnally supported by a pressure reduction in the housing (14).

4. Method according to one of the preceding claims,
**characterised in that** in step e) the desorbate is fed to a compressor (10), which conveys the desorbate into the environment (13) outside the closed habitat.

5. Method according to one of the preceding claims,
**characterised in that** the adsorber material has a pore size that is favourable in particular for a binding and adsorption of R134a or other freons.

6. Device for a removal of volatile organic substances from the contained air of closed habitats, comprising
a housing (14) with a first entry (E1), a second entry (E2), a first exit (A1) and a second exit (A2), and for accommodating an adsorber (3) that is implemented of a hydrophobic zeolite bed,
an contained air feed conduit (RZL) with a first valve (6) between the first entry (E1) and the closed habitat (1),
an contained air re-conveying conduit (RRL) with a second valve (5) between the first exit (A1) and the closed habitat (1),
a purging conduit (SL) with a third valve (8) between a purging medium storage container (SV) and the second entry (E2),
at least one exit air conduit (AL, AL1, AL2) at the second exit (A2) for a re-conveyance of air out of the adsorber bed into the closed habitat (1) and for a discharge of the desorbate to an environment (13) outside the closed habitat (1),
**characterised in that,**
viewed from the second exit (A2), a fourth valve (7), a vacuum pump (9) and a three-way valve (11) are arranged in the exit air conduit (AL) and that the one outlet of the three-way valve (11) is connected to the closed habitat (1) and the other outlet of the three-way valve (11) is connected to the environment (13) outside the closed habitat (1).

7. Device according to claim 6,
**characterised in that** a fan (15) is arranged in the contained air feed conduit (RZL) between the closed habitat (1) and the first valve (6).

8. Device according to claim 6 or 7,
**characterised in that** the housing (14) comprises a heating device (H), for example a heat exchanger or an electric heating.

9. Device according to claim 8,
**characterised in that** there is a compressor (10) between the three-way valve (11) and the environment (13).

10. Device at least according to claim 6,
**characterised in that** a first exit air conduit (AL1) that is connected to the second exit (A2) connects the second exit (A2) to the environment (13) outside the closed habitat (1), wherein the exit air conduit comprises a fourth valve (11).

11. Device according to claim 10,
**characterised in that** there is a compressor (10) in the first exit air conduit (AL1) between the environment (13) outside the closed habitat (1) and the fourth valve (11).

12. Device according to claim 10 or 11,
**characterised in that** the second exit air conduit (AL2) that is connected to the second exit (A2) connects the second exit to the closed habitat (1), wherein, viewed from the second exit, the exit air conduit (A2) comprises a fifth valve (7) and a vacuum pump (9).

## Revendications

1. Procédé pour enlever des substances organiques volatiles de l'air ambiant d'habitats fermés, comprenant les étapes suivantes :
a) Convoyer de l'air ambiant à travers d'un lit d'adsorbant (3) implémenté d'un lit zéolithe hydrophobique,
b) Fermeture du lit d'adsorbant,
c) Succion de l'air du lit d'adsorbant et alimentation de l'air à l'habitat fermé (1),
d) Désorption des substances organiques volatiles, notamment des fréons, comme R134a et VOCs, du lit d'adsorbant (3) par chauffage de l'adsorbant (3) et
e) Alimentation du désorbat à une ambiance (13) en dehors de l'habitat fermé, en convoyant de vapeur d'eau, de l'eau ou de dioxyde de carbone d'un réservoir stockage d'agent rinçant (SV) au lit d'adsorbant (3) via une conduite rinçage (SL).

2. Procédé selon la revendication 1,
**caractérisé en ce que** dans l'étape d) le chauffage de l'adsorbant (3) se réalise par chauffage électrique ou par des échangeurs thermiques raccordés au lit d'adsorption (3) ou par rinçage avec de vapeur d'eau, avec de l'eau ou avec de dioxyde de carbone chauds.

3. Procédé selon la revendication 1,
**caractérisé en ce que** dans l'étape d) la désorption est additionnellement supportée par une réduction de pression dans le boîtier (14).

4. Procédé selon l'une quelconque des revendications précédentes,
**caractérisé en ce que** dans l'étape e) le désorbat est alimenté à un compresseur (10), qui convoie le désorbat dans l'ambiance (13) en dehors de l'habitat fermé.

5. Procédé selon l'une quelconque des revendications précédentes,
**caractérisé en ce que** le matériau adsorbant a une taille de pores, qui est particulièrement favorable pour la liaison et adsorption de R134a ou d'autres fréons.

6. Dispositif pour enlever des substances organiques volatiles de l'air ambiant d'habitats fermés, comprenant
un boîtier (14) avec une première entrée (E1), une deuxième entrée (E2), une première sortie (A1) et une deuxième sortie (A2), et pour recevoir un adsorbant (3) réalisé par un lit zéolithe hydrophobique,
une conduite d'alimentation de l'air ambiant (RZL) avec une première vanne (6) entre la première entrée (E1) et l'habitat fermé (1),
une conduite de retour de l'air ambiant (RRL) avec une deuxième vanne (5) entre la première sortie (A1) et l'habitat fermé (1),
une conduite rinçage (SL) avec une troisième vanne (8) entre un réservoir stockage d'agent rinçant (SV) et la deuxième entrée (E2),
au moins une conduite d'air sortant (AL, AL1, AL2) à la deuxième sortie (A2) pour un reconduit de l'air du lit d'adsorbant dans l'habitat fermé (1) et pour une éconduite du désorbat à une ambiance (13) en dehors de l'habitat fermé (1),
**caractérisé en ce que**
dans la conduite d'air sortant (AL), vues à partir de la deuxième sortie (A2), une quatrième vanne (7), une pompe vacuum (9) et une vanne trois voies (11) sont disposées, et que l'une sortie de la vanne trois voies (11) est raccordée avec l'habitat fermé (1) et l'autre sortie de la vanne trois voies (11) est raccordée avec l'ambiance (13) en dehors de l'habitat fermé (1).

7. Dispositif selon la revendication 6,
**caractérisé en ce** q**u'**une soufflante (15) est disposée dans la conduite d'alimentation de l'air ambiant (RZL) entre l'habitat fermé (1) et la première vanne (6).

8. Dispositif selon l'une quelconque des revendications 6 ou 7,
**caractérisé en ce que** le boîtier (14) comporte un dispositif de chauffage (H), par exemple un échangeur thermique ou un chauffage électrique.

9. Dispositif selon la revendication 8,
**caractérisé en ce qu',** entre la vanne trois voies (11) et l'ambiance (13), il y a un compresseur (10).

10. Dispositif au moins selon la revendication 6,
**caractérisé en ce qu**'une première conduite d'air sortant (AL1) connectée à la deuxième sortie (A2) raccorde la deuxième sortie (A2) avec l'ambiance (13) en dehors de l'habitat fermé (1), la conduite d'air sortant comprenant une quatrième vanne (11).

11. Dispositif selon la revendication 10,
**caractérisé en ce que,** dans la première conduite d'air sortant (AL1) entre l'ambiance (13) en dehors de l'habitat fermé (1) et la quatrième vanne (11), il y a un compresseur (10).

12. Dispositif selon l'une quelconque des revendications 10 ou 11,
**caractérisé en ce que** la deuxième conduite d'air sortant (AL2) connectée à la deuxième sortie (A2) raccorde la deuxième sortie (A2) avec l'habitat fermé (1), la conduite d'air sortant (AL2) comprenant, vues à partir de la deuxième sortie, une cinquième vanne (7) et une pompe vacuum (9).
